# EUROPEAN PATENT SPECIFICATION

(11) **EP 4 195 076 B1**
(45) Date of publication and mention of the grant of the patent: **02.04.2025**
(21) Application number: 22200738.7
(22) Date of filing: 11.10.2022
(51) Int. Cl.: G06F 21/10, H04L 9/32, H04L 9/00

(54) **MECHANISMS TO SPECIFY AN ALLOWED AMOUNT OF CHANGE FOR DIGITAL MEDIA**
MECHANISMEN ZUR SPEZIFIZIERUNG EINES ZULÄSSIGEN ÄNDERUNGSWERTES FÜR DIGITALE MEDIEN
MÉCANISMES POUR SPÉCIFIER UNE QUANTITÉ AUTORISÉE DE CHANGEMENT POUR UN SUPPORT NUMÉRIQUE

(30) Priority: 12.12.2021 US 202117548577
(43) Date of publication of application: 14.06.2023
(73) Proprietor: INTEL Corporation, Santa Clara, CA 95054 (US)
(72) Inventor: BERENT, Arkadiusz, 80-209 Tuchom (PL); ZMIJEWSKI, Piotr, 80-298 Gdansk (PL); BRONK, Mateusz, 80288 Gdansk (PL)
(74) Representative: Maiwald GmbH

(56) References cited:
- US-A1- 2015 074 700
- US-A1- 2018 068 091
- "The Digital Property Rights Language - Version 2.00", INTERNET CITATION, 13 November 1998 (1998-11-13), pages 1 - 70, XP002485110, Retrieved from the Internet <URL:http://xml.coverpages.org/DPRLmanual-XML2.html> [retrieved on 20080618]

## Description

### BACKGROUND

Digital media creators commonly publish their work on the Internet. In some cases, creators may permit a work to be used as a base for a new project and modified by others. In some situations, the original creator may want to restrict how much and what changes can be made to the original work. This may be especially important as deepfake technologies become more commonly used. It may also be valuable when software licenses or other intellectual property rights are considered. Patent document US2018/068091 represents relevant prior art.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
Fig. 1 is a simplified schematic diagram of a data processing environment in which mechanisms to specify an allowed amount of change for digital media may be implemented, according to embodiments.
Fig. 2 is a simplified schematic diagram of data flows in an environment in which mechanisms to specify an allowed amount of change for digital media may be implemented, according to embodiments.
Fig. 3 is a simplified is a simplified flow diagram of operations in a method to specify an allowed amount of change for digital media, according to embodiments.
Fig. 4 is a simplified is a simplified flow diagram of operations in a method to specify an allowed amount of change for digital media, according to embodiments.
Fig. 5 is a simplified is a simplified flow diagram of operations in a method to specify an allowed amount of change for digital media, according to embodiments.
Fig. 6 is a block diagram illustrating a computing architecture which may be adapted to provide a method for specify an allowed amount of change for digital media according to an embodiment.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).
In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

As described above, digital media creators commonly publish their work on the Internet. In some cases, creators may permit a work to be used as a base for a new project and modified by others. In some situations, the original creator may want to restrict how much and what changes can be made to the original work. This may be especially important as deepfake technologies become more commonly used. It may also be valuable when software licenses or other intellectual property rights are considered.

Existing techniques are based on licensing digital content in its entirety. When author of digital content publishes it, the author may adopt a licensing scheme such as a version of the General Public License (GPL), Creative Commons or more restrictive (sometimes proprietary licenses). Those types of licenses allow or prohibit modifications to an entire work. Similarly, non-fungible token (NFT) technology works operates on an entire work.

Further, licensing schemes that allow modifications typically do not define precisely what and how a licensed work may be changed. For example, it is not typically possible to define a license to protect only a part of the artwork. Nor is it possible to programmatically determine if the license is violated or is no longer in effect because of a large number of changes (e.g., when GPL license does not hold anymore, and code may be used without GPL restrictions.

To address these and other issues, described herein are systems and methods to specify an allowed amount of change for digital media. In some examples an author may create a set of rules defining, e.g., what, how and by whom an original digital content can be changed. The rules may be embedded in a digital certificate created by, for example, the digital content author or owner. The certificate may comprise detailed licensing information and could be part of the digital content (i.e., it may "travel" with it) or could be available to get from some other sources like one or more Internet websites. The certificate may also be distributed using blockchain technology, etc. Further, one or more protocols for verification and/ or attestation to determine whether changes done to the original content are compliant with the license may be implemented.

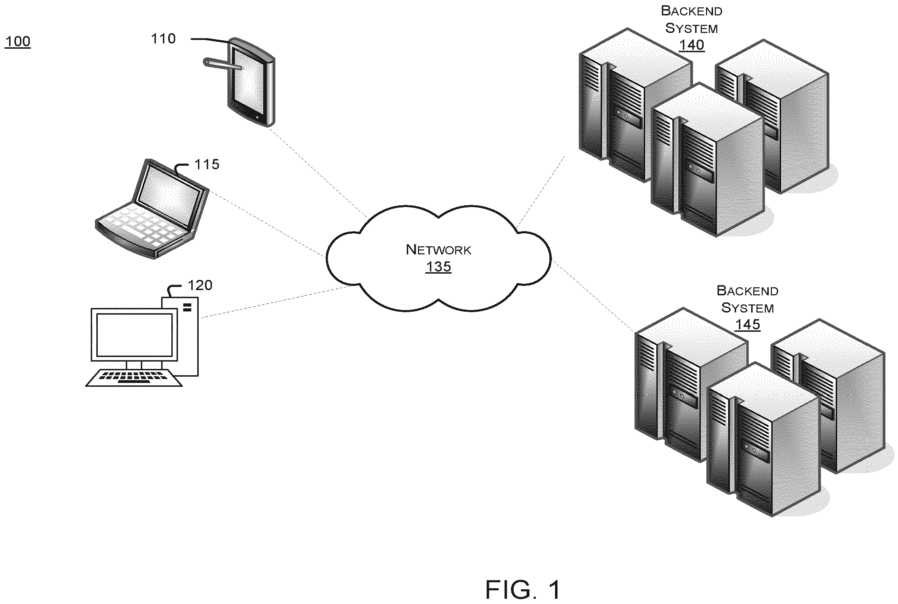

Fig. 1 is a simplified schematic diagram of a data processing environment 100 in which mechanisms to specify an allowed amount of change for digital media may be implemented, according to embodiments. Referring to Fig. 1, in some embodiments the environment 100 comprises one or more computing devices such as a hand-held device 110, a laptop device 115, or a workstation 120 that may be communicatively coupled to one or more backend systems (e.g., servers) 140, 145 by a communication network 135. In some examples the one or more computing devices 110, 115, 120 and/or backend systems 140, 145 may be used to generate original digital media content, e.g., photographs, videos, animation, software, audio/music, or the like. The content may be stored on the one or more backend systems and presented for use on one or more computing devices 110, 115, 120.

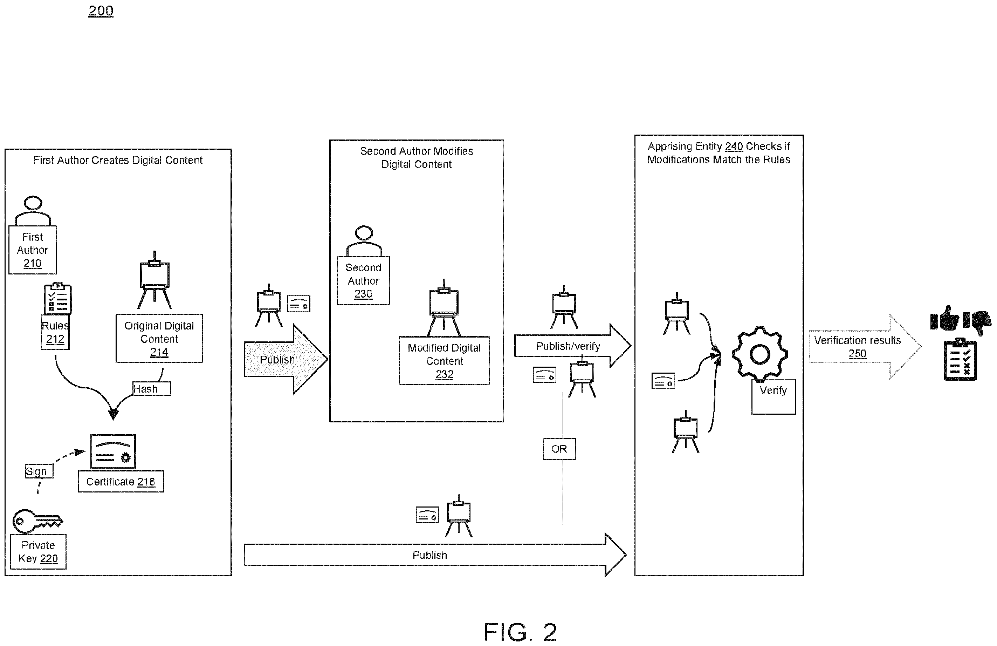

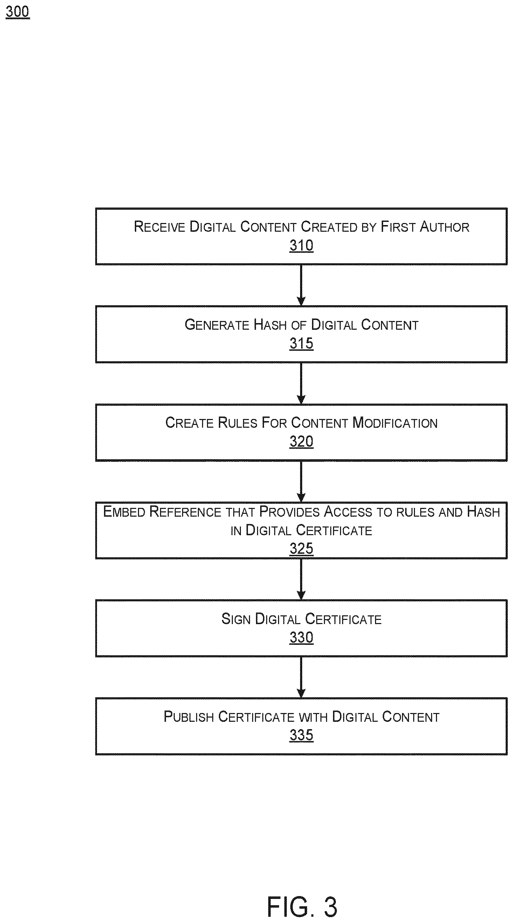

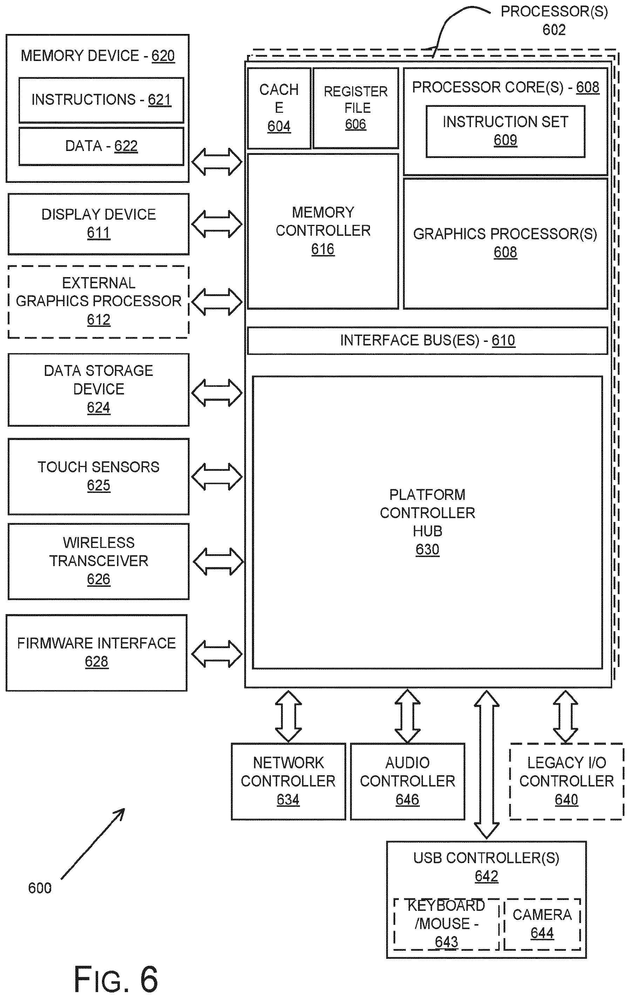

Various aspects of systems and methods to specify an allowed amount of change for digital media will be explained with reference to Fig. 2, which is a simplified schematic diagram of data flows in an environment in which mechanisms to specify an allowed amount of change for digital media may be implemented, according to embodiments, and with reference to Figs. 3-5, which are flowcharts illustrating operations in a method to specify an allowed amount of change for digital media may be implemented, according to embodiments. In some examples the various components of the environment 100 may be implemented by software-defined process that execute on a general-purpose processor, such as the system depicted in Fig. 6. In other examples the various components may be implemented in a configurable processing device such as a field programmable gate array (FPGA) or reduced to hard-wired circuitry

Referring first to Figs. 2-3 in some examples a first author 210 may create an original digital content 214. At operation 310 the original content may be received in a computing device such as any of the computing devices 110, 115, 120 or the backend systems 140, 145 depicted in Fig. 1. In some examples the original digital content may comprise a digital artwork such as one or more photographs, videos, animation, musical pieces, software, or the like. At operation 315 a hash of the original digital content 214 is generated.

At operation 320 a set of rules are created for modification of the digital content created by the first author. In some examples the rules may be implemented in the form of a computer-readable syntax which may enable the first author, or an agent or representative thereof, to define rules that specify an allowed amount of change that may be made to the original digital content 214. In some examples the rules define a maximum amount of change which may be implemented in a modified copy of the original digital content. The change may be measured and/or defined, for example, using a hamming distance or a percentage of vertices in a three-dimensional object that are moved and/or added and/or removed, a percentage of pixel that are changed, an amount of color range changes, a number of changes in the source code (e.g., number of different lines of code) of a computer program, a number of different bytes in a compiled code and/or bytecode, or a number of pitch and/or note and/or tone changes in a song, or the like.

In other examples the rules may define a minimum amount of change which may be implemented in a modified copy of the original digital content. Again, the change may be measured and/or defined, for example, using a hamming distance or a percentage of vertices in a three-dimensional object that are moved and/or added and/or removed, a percentage of pixel that are changed, an amount of color range changes, a number of changes in the source code (e.g., number of different lines of code) of a computer program, a number of different bytes in a compiled code and/or bytecode, or a number of pitch and/or note and/or tone changes in a song, or the like. In some examples this measurement may be used to identify when GPL license is no longer applicable and code could be used without GPL requirements (i.e., no need to publish sources, etc.).

In other examples the rules may identify areas of the original digital content 214 which may or may not be changed. For example, the areas may be defined three-dimensional objects (e.g., cubes, spheres, other shapes, etc.) for three-dimensional models, and polygons for images and movies and animations, frame ranges for movies and animations, portion of computer programs, song, etc.).

In other examples the rules may define who is permitted to modify the original digital content 214 and who is not permitted to modify the original digital content. For example, the rules may identify geographic regions or corporate organizations in which modifications are not permitted. Alternatively, or in addition, the rules may specify that only non-profit organizations are to be permitted to modify the original digital content 214.

In other examples the rules may define whether, when, and in what ways, the original digital content 214 may be extended and/or incorporated into other content. For example, the rules may allow or prohibit the addition of a soundtrack to the original digital content 214, or may allow only a defined percentage or defined parts of the original digital content to be incorporated into other content. One or more rules may also define times at which changes may be made to the content. For example, the change can be done after specific date, or before specific date, or within some time window, or outside some time window

In other examples the rules may define what types of tools may or may not be used to modify the original digital content 214. For example, the rules may specify what types of hardware and/or software may be used to modify the original digital content 214.

In other examples the rules may be bound to an external event such as a smart contract.

In other examples the rules may limit a length of a chain of derivative works that may be made by modifying the original digital content 214.

At operation 325 a reference that provides access to the rules generated in operation 320 and the hash generated in operation 315 may be embedded into a digital certificate 218. In some examples, the reference may include a copy of the rules created in operation 320. In other examples the reference may comprise a pointer or other reference to a location of the rules. For example, if the rules are in the form of a machine learning algorithm with a data model which may be large in size, it may be efficient to store a hash of the rules in the certificate along with the reference to the location the rules and the data model can be downloaded from. Alternatively, or in addition, the rules may contain only information that a specific machine language (ML) algorithm with some specific data model must pass the check. In that case, a pointer to the ML algorithm and data model may be provided in rules. In other words the rules may be entirely ML algorithm and/or data, or rules may contain info which ML algorithm and/or data must be used. In both cases links to ML algorithm and/or data may be provided.

At operation 330 the digital certificate 218 may be signed using a cryptographic signature scheme with a private key 220. At operation 335 the original digital content 214 and the digital certificate 218 are published, e.g., by posting them on a website.

Thus, the operations depicted in Fig. 2 enable the first author to package a set of rules which may be expressed in the form of a computer-readable syntax along with an original digital content 214. The rules and the hash of the original digital content 214 may be digitally signed by the original work author. The certificate may be attached to the original digital content 214 together with a license, may replace the license, or be a part of the license. It may also be available for download from a website or be available through blockchain technology or interactive protocol with an apprising entity 240.

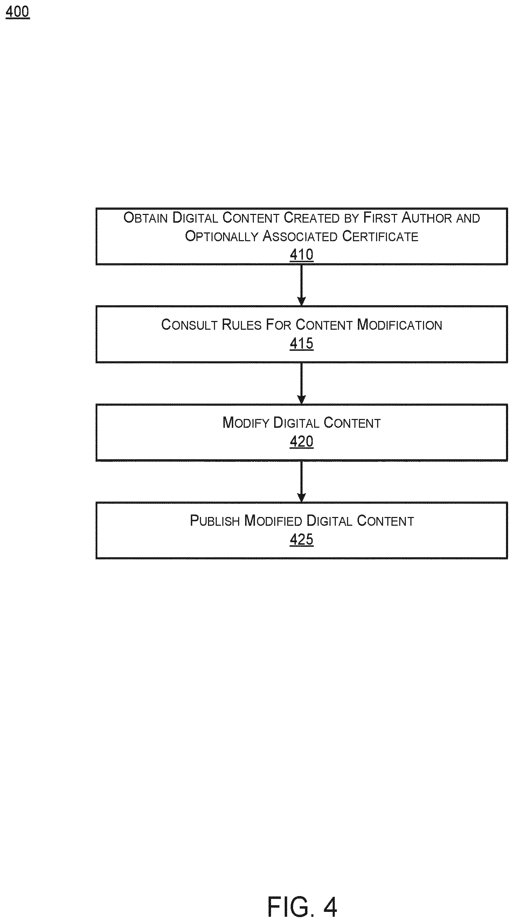

Referring to Fig. 2 and Fig. 4, once the original digital content 214 is published a second author 230 may, at operation 410, obtain a copy of the original digital content 214 created by the first author 210, and may optionally obtain a copy of the certificate 218 published with the original digital content. At operation 415 the second author 230 may optionally consult the rules for content modification, and at operation 420 the second author 230 may modify the original digital content 214 obtained in operation 410 to create a modified digital content 232. In some examples the second author 230 may verify that all constraints imposed by the rules are satisfied before publishing the modified digital content 232. Online and/or local/offline tools may be used to perform this verification. At operation 425 the modified digital content may be published, e.g., by posting them on a website.

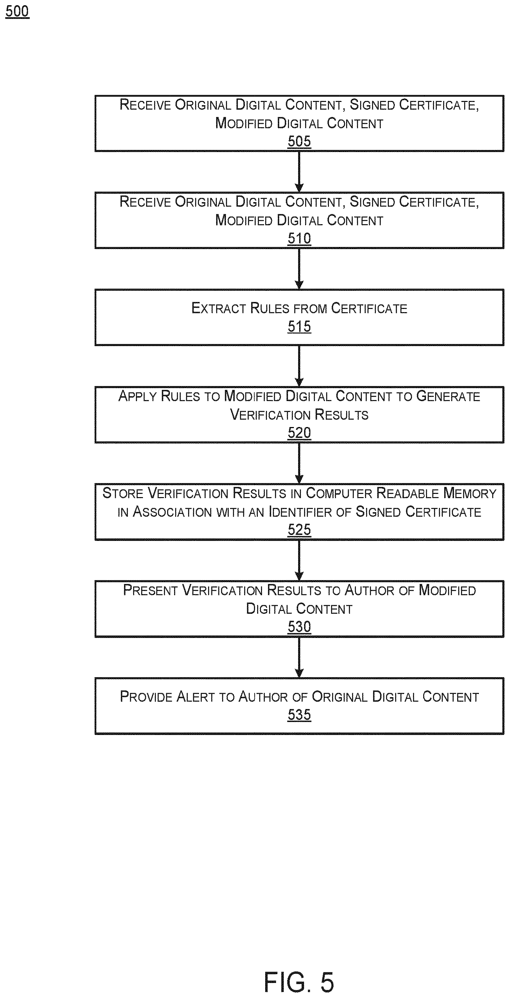

Referring to Fig. 2 and Fig. 5, once the modified digital content 232 is published an apprising entity 240 may initiate operations to determine whether the modifications to the original digital content 214 implemented by the second author 230 to generate the modified digital content 232 were permissible with the rules established by the first author 210. Referring to Fig. 5, at operation 505 the apprising entity 240 receives the original digital content 214, a signed certificate 218, and a modified digital content 232 based on the original digital content 214. In some examples the apprising entity 240 may be instantiated as a website that receives the both the original digital content 214 and the modified digital content 232. In other examples the apprising entity 240 may be instantiated as a tool (e.g., a bot) that crawls the Internet to examine digital content, or an application that may be installed on a computing device such as any of the computing devices 110, 115, 120 or the backend systems 140, 145. At operation 510 the apprising entity 240 verifies the certificate 218, including the signature, to ensure that the certification 218 is valid.

At operation 515 the apprising entity 240 extracts the rules defined in operation 320 from the signed certificate 218. At operation 520 the apprising entity 240 applies the rules to the modified digital content to generate a set of verification results. In some examples, a set of tools may be used to verify whether the modified digital content 232 complies with the rules defined in the certificate. Examples of tools may include algorithms such as the calculation of a hamming distance to define the difference between the original digital content 214 and the modified digital content 232. Other tools may include artificial intelligence (AI) and/or machine language (ML) algorithms and models. For example, the hash of the model may be stored in the certificate along with rule) and a reference to a place from which it can be obtained (e.g., website, ledger, etc.). For example, if a specific AI classifier (identified by its hash) returns that there is a cat on the image, the rule passes. In other examples verification may be implemented using external events such as smart contracts and/or distributed ledger technology. For example, as long as the smart contract is valid, the rule is valid too and passes. In other examples verification may be based on local software, remote verification using a protocol or manual verification. A remote apprising entity 240 may also be elected using a protocol. In other examples the use of ledger and/or blockchain as a source of verification information (source of certificates with rules) may be implemented. Further, digital content editing tools may be also extended to support verification or to act on rules violation (i.e., edits may be rejected if they are against the rules in the certificate). In some examples operation 520 may be implemented in a secure processing environment (e.g., a trusted execution environment (TEE)).

At operation 525 the verification results may be stored in a computer-readable memory in association with an identifier of the signed certificate 218 or the certificate itself. For example, the apprising entity 240 may maintain a file or database that identifies the certificate 218 and/or the original digital work 214 and an identifier of the modified digital content 232.

At operation 530 the apprising entity 240 may present the verification results 250 to the second author 230 of the modified digital content 232. For example, the second author 230 may be notified that one or more modifications to the original digital content were inconsistent with the rules established in operation 320. The second author 230 may be given an opportunity to make further modifications to the original digital content 214 to bring the modified digital content 232 into compliance with the rules established in operation 320. This process may be repeated until the modified digital content 232 complies with the rules established in operation 320.

At operation 535 the apprising entity 240 may provide an alert to the first author 210 of the original digital content 214. In some examples the alert may comprise the verification results and an identifier of the second author 232 who produced the modified digital content. The first author 210 may then choose whether to take a corrective action against the second author 230. Alternatively, or in addition, the verification results may be provided to a third party such as a licensing authority, which may take appropriate corrective action.

Thus, the operations depicted in Fig. 5 enable an apprising device to evaluate the modified digital content 232 to determine whether it complies with the rules defined by the first author 210 of the original digital content 214, and to present verification results thereof to the interested parties. In some examples the apprising entity 240 may be accessed and/or used by entities other than the first author 210 or the second author 230.

### Exemplary Computing Architecture

Fig. 6 is a block diagram illustrating a computing architecture which may be adapted to implement a secure address translation service using a permission table (e.g., HPT 135 or HPT 260) and based on a context of a requesting device in accordance with some examples. The embodiments may include a computing architecture supporting one or more of (i) verification of access permissions for a translated request prior to allowing a memory operation to proceed; (ii) prefetching of page permission entries of an HPT responsive to a translation request; and (iii) facilitating dynamic building of the HPT page permissions by system software as described above.

In various embodiments, the computing architecture 600 may comprise or be implemented as part of an electronic device. In some embodiments, the computing architecture 600 may be representative, for example, of a computer system that implements one or more components of the operating environments described above. In some embodiments, computing architecture 600 may be representative of one or more portions or components in support of a secure address translation service that implements one or more techniques described herein.

As used in this application, the terms "system" and "component" and "module" are intended to refer to a computer-related entity, either hardware, a combination of hardware and software, software, or software in execution, examples of which are provided by the exemplary computing architecture 600. For example, a component can be, but is not limited to being, a process running on a processor, a processor, a hard disk drive or solid state drive (SSD), multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 600 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 600.

As shown in Fig. 6, the computing architecture 600 includes one or more processors 602 and one or more graphics processors 608, and may be a single processor desktop system, a multiprocessor workstation system, or a server system having a large number of processors 602 or processor cores 607. In on embodiment, the system 600 is a processing platform incorporated within a system-on-a-chip (SoC or SOC) integrated circuit for use in mobile, handheld, or embedded devices.

An embodiment of system 600 can include, or be incorporated within, a server-based gaming platform, a game console, including a game and media console, a mobile gaming console, a handheld game console, or an online game console. In some embodiments system 600 is a mobile phone, smart phone, tablet computing device or mobile Internet device. Data processing system 600 can also include, couple with, or be integrated within a wearable device, such as a smart watch wearable device, smart eyewear device, augmented reality device, or virtual reality device. In some embodiments, data processing system 600 is a television or set top box device having one or more processors 602 and a graphical interface generated by one or more graphics processors 608.

In some embodiments, the one or more processors 602 each include one or more processor cores 607 to process instructions which, when executed, perform operations for system and user software. In some embodiments, each of the one or more processor cores 607 is configured to process a specific instruction set 614. In some embodiments, instruction set 609 may facilitate Complex Instruction Set Computing (CISC), Reduced Instruction Set Computing (RISC), or computing via a Very Long Instruction Word (VLIW). Multiple processor cores 607 may each process a different instruction set 609, which may include instructions to facilitate the emulation of other instruction sets. Processor core 607 may also include other processing devices, such a Digital Signal Processor (DSP).

In some embodiments, the processor 602 includes cache memory 604. Depending on the architecture, the processor 602 can have a single internal cache or multiple levels of internal cache. In some embodiments, the cache memory is shared among various components of the processor 602. In some embodiments, the processor 602 also uses an external cache (e.g., a Level-3 (L3) cache or Last Level Cache (LLC)) (not shown), which may be shared among processor cores 607 using known cache coherency techniques. A register file 606 is additionally included in processor 602 which may include different types of registers for storing different types of data (e.g., integer registers, floating point registers, status registers, and an instruction pointer register). Some registers may be general-purpose registers, while other registers may be specific to the design of the processor 602.

In some embodiments, one or more processor(s) 602 are coupled with one or more interface bus(es) 610 to transmit communication signals such as address, data, or control signals between processor 602 and other components in the system. The interface bus 610, in one embodiment, can be a processor bus, such as a version of the Direct Media Interface (DMI) bus. However, processor buses are not limited to the DMI bus, and may include one or more Peripheral Component Interconnect buses (e.g., PCI, PCI Express), memory buses, or other types of interface buses. In one embodiment the processor(s) 602 include an integrated memory controller 616 and a platform controller hub 630. The memory controller 616 facilitates communication between a memory device and other components of the system 600, while the platform controller hub (PCH) 630 provides connections to I/O devices via a local I/O bus.

Memory device 620 can be a dynamic random-access memory (DRAM) device, a static random-access memory (SRAM) device, flash memory device, phase-change memory device, or some other memory device having suitable performance to serve as process memory. In one embodiment the memory device 620 can operate as system memory for the system 600, to store data 622 and instructions 621 for use when the one or more processors 602 execute an application or process. Memory controller hub 616 also couples with an optional external graphics processor 612, which may communicate with the one or more graphics processors 608 in processors 602 to perform graphics and media operations. In some embodiments a display device 611 can connect to the processor(s) 602. The display device 611 can be one or more of an internal display device, as in a mobile electronic device or a laptop device or an external display device attached via a display interface (e.g., DisplayPort, etc.). In one embodiment the display device 611 can be a head mounted display (HMD) such as a stereoscopic display device for use in virtual reality (VR) applications or augmented reality (AR) applications.

In some embodiments the platform controller hub 630 enables peripherals to connect to memory device 620 and processor 602 via a high-speed I/O bus. The I/O peripherals include, but are not limited to, an audio controller 646, a network controller 634, a firmware interface 628, a wireless transceiver 626, touch sensors 625, a data storage device 624 (e.g., hard disk drive, flash memory, etc.). The data storage device 624 can connect via a storage interface (e.g., SATA) or via a peripheral bus, such as a Peripheral Component Interconnect bus (e.g., PCI, PCI Express). The touch sensors 625 can include touch screen sensors, pressure sensors, or fingerprint sensors. The wireless transceiver 626 can be a Wi-Fi transceiver, a Bluetooth transceiver, or a mobile network transceiver such as a 3G, 4G, Long Term Evolution (LTE), or 5G transceiver. The firmware interface 628 enables communication with system firmware, and can be, for example, a unified extensible firmware interface (UEFI). The network controller 634 can enable a network connection to a wired network. In some embodiments, a high-performance network controller (not shown) couples with the interface bus 610. The audio controller 646, in one embodiment, is a multichannel high definition audio controller. In one embodiment the system 600 includes an optional legacy I/O controller 640 for coupling legacy (e.g., Personal System 2 (PS/2)) devices to the system. The platform controller hub 630 can also connect to one or more Universal Serial Bus (USB) controllers 642 connect input devices, such as keyboard and mouse 643 combinations, a camera 644, or other USB input devices.

In the description above, for the purposes of explanation, numerous specific details are set forth in order to provide a thorough understanding of the described embodiments. It will be apparent, however, to one skilled in the art that embodiments may be practiced without some of these specific details. In other instances, well-known structures and devices are shown in block diagram form. There may be intermediate structure between illustrated components. The components described or illustrated herein may have additional inputs or outputs that are not illustrated or described.

Various embodiments may include various processes. These processes may be performed by hardware components or may be embodied in computer program or machine-executable instructions, which may be used to cause a general-purpose or special-purpose processor or logic circuits programmed with the instructions to perform the processes. Alternatively, the processes may be performed by a combination of hardware and software.

Portions of various embodiments may be provided as a computer program product, which may include a computer-readable medium having stored thereon computer program instructions, which may be used to program a computer (or other electronic devices) for execution by one or more processors to perform a process according to certain embodiments. The computer-readable medium may include, but is not limited to, magnetic disks, optical disks, read-only memory (ROM), random access memory (RAM), erasable programmable read-only memory (EPROM), electrically-erasable programmable read-only memory (EEPROM), magnetic or optical cards, flash memory, or other type of computer-readable medium suitable for storing electronic instructions. Moreover, embodiments may also be downloaded as a computer program product, wherein the program may be transferred from a remote computer to a requesting computer.

Many of the methods are described in their most basic form, but processes can be added to or deleted from any of the methods and information can be added or subtracted from any of the described messages without departing from the basic scope of the present embodiments. It will be apparent to those skilled in the art that many further modifications and adaptations can be made. The particular embodiments are not provided to limit the concept but to illustrate it. The scope of the embodiments is not to be determined by the specific examples provided above but only by the claims below.

If it is said that an element "A" is coupled to or with element "B," element A may be directly coupled to element B or be indirectly coupled through, for example, element C. When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is only one of the described elements.

An embodiment is an implementation or example. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments, various features are sometimes grouped together in a single embodiment, figure, or description thereof for the purpose of streamlining the disclosure and aiding in the understanding of one or more of the various novel aspects. This method of disclosure, however, is not to be interpreted as reflecting an intention that the claimed embodiments requires more features than are expressly recited in each claim. Rather, as the following claims reflect, novel aspects lie in less than all features of a single foregoing disclosed embodiment. Thus, the claims are hereby expressly incorporated into this description, with each claim standing on its own as a separate embodiment.

## Claims

1. A processor-implemented method, comprising:
generating an original digital content (214);
generating (320) a first set of rules pertaining to permissible changes to the original digital content;
generating (330) a cryptographically signed certificate comprising a reference that provides access to the first set of rules and a hash of the original digital content; and
publishing (335) the original digital content and the associated cryptographically signed certificate;
further comprising:
receiving (505), in an apprising entity, the original digital content, the cryptographically signed certificate, and a modified digital content derived from the original digital content;
extracting (515), from the signed certificate, the first set of rules pertaining to permissible changes to the original digital content;
applying (520) the first set of rules to the modified digital content to generate a set of verification results, comprising utilizing one or more tools to verify whether the modified digital content complies with the first set of rules defined in the cryptographically signed certificate, and wherein the certificate comprises a hash identifying the one or more tools; and
storing (525) the set of verification results in a computer-readable memory in association with an identifier of the signed certificate.

2. The method of claim 1, wherein the first set of rules comprises at least one of:
a maximum amount of permissible change for at least one object in the original digital content;
a minimum amount of permissible change for at least one object in the original digital content;
an identifier of one or more portions of the original digital content that cannot be modified;
one or more rules regulating who can modify the original digital content;
one or more rules regulating who cannot modify the original digital content;
one or more rules regulating which tools may be used to modify the original digital content; or
one or more rules defining whether the original digital content may be extended or modified.

3. The method of any one of claims 1-2, wherein the first set of rules comprises:
one or more rules binding the first set of rules to a smart contract.

4. The method of any one of claims 1-3, wherein the first set of rules comprises:
one or more rules limiting a length of a chain of derivative works.

5. The method of any one of claims 1-4, further comprising:
presenting the verification results to an author of the modified content derived from the original content.

6. The method of any one of claims 1-5, further comprising:
providing an alert to an author of the original digital content.

7. An apparatus, comprising processing circuitry to:
generate an original digital content;
generate a first set of rules pertaining to permissible changes to the original digital content;
generate a cryptographically signed certificate comprising a reference that provides access to the first set of rules and a hash of the original digital content; and
publish the original digital content and the associated cryptographically signed certificate;
further comprising processor circuitry to:
receive, in an apprising entity, the original digital content, the cryptographically signed certificate, and a modified digital content derived from the original digital content;
extract, from the signed certificate, the first set of rules pertaining to permissible changes to the original digital content;
apply the first set of rules to the modified digital content to generate a set of verification results, comprising utilization of one or more tools to verify whether the modified digital content complies with the first set of rules defined in the cryptographically signed certificate, and wherein the certificate comprises a hash identifying the one or more tools; and
store the set of verification results in a computer-readable memory in association with an identifier of the signed certificate.

8. The apparatus of claim 7, wherein the first set of rules comprises at least one of:
a maximum amount of permissible change for at least one object in the original digital content;
a minimum amount of permissible change for at least one object in the original digital content;
an identifier of one or more portions of the original digital content that cannot be modified;
one or more rules regulating who can modify the original digital content;
one or more rules regulating who cannot modify the original digital content;
one or more rules regulating which tools may be used to modify the original digital content; or
one or more rules defining whether the original digital content may be extended or modified.

9. The apparatus of any one of claims 7-8, wherein the first set of rules comprises:
one or more rules binding the first set of rules to a smart contract.

10. The apparatus of any one of claims 7-9, wherein the first set of rules comprises:
one or more rules limiting a length of a chain of derivative works.

11. The apparatus of any one of claims 7-10, further comprising processing circuitry to:
present the verification results to an author of the modified content derived from the original content.

12. The apparatus of any one of claims 7-11, further comprising processing circuitry to:
providing an alert to an author of the original digital content

## Patentansprüche

1. Prozessorimplementiertes Verfahren, das Folgendes umfasst:
Erzeugen eines ursprünglichen digitalen Inhalts (214);
Erzeugen (320) eines ersten Satzes von Regeln, die zulässige Änderungen des ursprünglichen digitalen Inhalts betreffen;
Erzeugen (330) eines kryptografisch signierten Zertifikats, das eine Referenz umfasst, die Zugriff auf den ersten Satz von Regeln und einen Hash des ursprünglichen digitalen Inhalts bereitstellt; und
Veröffentlichen (335) des ursprünglichen digitalen Inhalts und des zugehörigen kryptografisch signierten Zertifikats;
ferner Folgendes umfassend:
Empfangen (505), in einer informierenden Entität, des ursprünglichen digitalen Inhalts, des kryptografisch signierten Zertifikats und eines modifizierten digitalen Inhalts, der von dem ursprünglichen digitalen Inhalt abgeleitet ist;
Extrahieren (515), aus dem signierten Zertifikat, des ersten Satzes von Regeln für zulässige Änderungen des ursprünglichen digitalen Inhalts;
Anwenden (520) des ersten Satzes von Regeln auf den modifizierten digitalen Inhalt, um einen Satz von Verifizierungsergebnissen zu erzeugen, umfassend die Verwendung eines oder mehrerer Werkzeuge, um zu verifizieren, ob der modifizierte digitale Inhalt den ersten Satz von Regeln erfüllt, die in dem kryptografisch signierten Zertifikat definiert sind, und wobei das Zertifikat einen Hash umfasst, der das eine oder die mehreren Werkzeuge identifiziert; und
Speichern (525) des Satzes von Verifizierungen in einem computerlesbaren Speicher in Verbindung mit einer Kennung des signierten Zertifikats.

2. Verfahren nach Anspruch 1, wobei der erste Satz von Regeln mindestens eines der Folgenden umfasst:
ein Höchstmaß an zulässiger Änderung für mindestens ein Objekt im ursprünglichen digitalen Inhalt;
einen Mindestbetrag der zulässigen Änderung für mindestens ein Objekt im ursprünglichen digitalen Inhalt;
eine Kennung eines oder mehrerer Teile des ursprünglichen digitalen Inhalts, die nicht geändert werden können;
eine oder mehrere Regeln, die regeln, wer den ursprünglichen digitalen Inhalt ändern kann;
eine oder mehrere Regeln, die regeln, wer den ursprünglichen digitalen Inhalt nicht ändern kann;
eine oder mehrere Regeln, die regeln, welche Werkzeuge verwendet werden können, um den ursprünglichen digitalen Inhalt zu modifizieren; oder
eine oder mehrere Regeln, die definieren, ob der ursprüngliche digitale Inhalt erweitert oder geändert werden kann.

3. Verfahren nach einem der Ansprüche 1-2, wobei der erste Satz von Regeln Folgendes umfasst:
eine oder mehrere Regeln, die den ersten Satz von Regeln an einen intelligenten Vertrag binden.

4. Verfahren nach einem der Ansprüche 1-3, wobei der erste Satz von Regeln Folgendes umfasst:
eine oder mehrere Regeln, die eine Länge einer Kette von abgeleiteten Werken begrenzen.

5. Verfahren nach einem der Ansprüche 1-4, das ferner Folgendes umfasst:
Präsentieren der Verifizierungsergebnisse an einen Autor des modifizierten Inhalts, der aus dem ursprünglichen Inhalt abgeleitet wurde.

6. Verfahren nach einem der Ansprüche 1-5, das ferner Folgendes umfasst:
Bereitstellen einer Warnung an einen Autor des ursprünglichen digitalen Inhalts.

7. Vorrichtung, die eine Verarbeitungsschaltung umfasst, um Folgendes durchzuführen:
Erzeugen eines ursprünglichen digitalen Inhalts;
Erzeugen eines ersten Satzes von Regeln, die zulässige Änderungen des ursprünglichen digitalen Inhalts betreffen;
Erzeugen eines kryptografisch signierten Zertifikats, das eine Referenz umfasst, die Zugriff auf den ersten Satz von Regeln und einen Hash des ursprünglichen digitalen Inhalts bereitstellt; und
Veröffentlichen des ursprünglichen digitalen Inhalts und des zugehörigen kryptografisch signierten Zertifikats;
ferner eine Prozessorschaltung umfassend, um Folgendes durchzuführen:
Empfangen, in einer informierenden Entität, des ursprünglichen digitalen Inhalts, des kryptografisch signierten Zertifikats und eines modifizierten digitalen Inhalts, der von dem ursprünglichen digitalen Inhalt abgeleitet ist;
Extrahieren, aus dem signierten Zertifikat, des ersten Satzes von Regeln für zulässige Änderungen des ursprünglichen digitalen Inhalts;
Anwenden des ersten Satzes von Regeln auf den modifizierten digitalen Inhalt, um einen Satz von Verifizierungsergebnissen zu erzeugen, umfassend die Verwendung eines oder mehrerer Werkzeuge, um zu verifizieren, ob der modifizierte digitale Inhalt den ersten Satz von Regeln erfüllt, die in dem kryptografisch signierten Zertifikat definiert sind, und wobei das Zertifikat einen Hash umfasst, der das eine oder die mehreren Werkzeuge identifiziert; und
Speichern des Satzes von Verifizierungsergebnissen in einem computerlesbaren Speicher in Verbindung mit einer Kennung des signierten Zertifikats.

8. Vorrichtung nach Anspruch 7, wobei der erste Satz von Regeln mindestens eines der Folgenden umfasst:
ein Höchstmaß an zulässiger Änderung für mindestens ein Objekt im ursprünglichen digitalen Inhalt;
einen Mindestbetrag der zulässigen Änderung für mindestens ein Objekt im ursprünglichen digitalen Inhalt;
eine Kennung eines oder mehrerer Teile des ursprünglichen digitalen Inhalts, die nicht geändert werden können;
eine oder mehrere Regeln, die regeln, wer den ursprünglichen digitalen Inhalt ändern kann;
eine oder mehrere Regeln, die regeln, wer den ursprünglichen digitalen Inhalt nicht ändern kann;
eine oder mehrere Regeln, die regeln, welche Werkzeuge verwendet werden können, um den ursprünglichen digitalen Inhalt zu modifizieren; oder
eine oder mehrere Regeln, die definieren, ob der ursprüngliche digitale Inhalt erweitert oder geändert werden kann.

9. Vorrichtung nach einem der Ansprüche 7-8, wobei der erste Satz von Regeln Folgendes umfasst:
eine oder mehrere Regeln, die den ersten Satz von Regeln an einen intelligenten Vertrag binden.

10. Vorrichtung nach einem der Ansprüche 7-9, wobei der erste Satz von Regeln Folgendes umfasst:
eine oder mehrere Regeln, die eine Länge einer Kette von abgeleiteten Werken begrenzen.

11. Vorrichtung nach einem der Ansprüche 7-10, ferner umfassend eine Verarbeitungsschaltung, um Folgendes durchzuführen:
Präsentieren der Verifizierungsergebnisse für einen Autor des modifizierten Inhalts, der aus dem ursprünglichen Inhalt abgeleitet wurde.

12. Vorrichtung nach einem der Ansprüche 7-11, ferner umfassend eine Verarbeitungsschaltung, um Folgendes durchzuführen:
Bereitstellen einer Warnung an einen Autor des ursprünglichen digitalen Inhalts.

## Revendications

1. Procédé mis en œuvre par un processeur, comportant :
la génération d'un contenu numérique d'origine (214) ;
la génération (320) d'un premier ensemble de règles se rapportant à des changements admissibles sur le contenu numérique d'origine ;
la génération (330) d'un certificat signé cryptographiquement comportant une référence qui donne accès au premier ensemble de règles et un hachage du contenu numérique d'origine ; et
la publication (335) du contenu numérique d'origine et du certificat signé cryptographiquement associé ;
comportant en outre :
la réception (505), dans une entité évaluatrice, du contenu numérique d'origine, du certificat signé cryptographiquement, et d'un contenu numérique modifié dérivé du contenu numérique d'origine ;
l'extraction (515), à partir du certificat signé, du premier ensemble de règles se rapportant à des changements admissibles sur le contenu numérique d'origine ;
l'application (520) du premier ensemble de règles au contenu numérique modifié pour générer un ensemble de résultats de vérification, ce qui comporte l'utilisation d'un ou de plusieurs outils pour vérifier si le contenu numérique modifié se conforme au premier ensemble de règles défini dans le certificat signé cryptographiquement, et le certificat comportant un hachage identifiant l'outil ou les outils ; et
le stockage (525) de l'ensemble de résultats de vérification dans une mémoire lisible par ordinateur en association avec un identifiant du certificat signé.

2. Procédé selon la revendication 1, le premier ensemble de règles comportant au moins un élément parmi :
une quantité maximum de changement admissible pour au moins un objet dans le contenu numérique d'origine ;
une quantité minimum de changement admissible pour au moins un objet dans le contenu numérique d'origine ;
un identifiant d'une ou plusieurs parties du contenu numérique d'origine qui ne peuvent pas être modifiées ;
une ou plusieurs règles stipulant qui peut modifier le contenu numérique d'origine ;
une ou plusieurs règles stipulant qui ne peut pas modifier le contenu numérique d'origine ;
une ou plusieurs règles stipulant quels outils peuvent être utilisés pour modifier le contenu numérique d'origine ; ou
une ou plusieurs règles définissant si le contenu numérique d'origine peut être étendu ou modifié.

3. Procédé selon l'une quelconque des revendications 1 à 2, le premier ensemble de règles comportant :
une ou plusieurs règles liant le premier ensemble de règles à un contrat intelligent.

4. Procédé selon l'une quelconque des revendications 1 à 3, le premier ensemble de règles comportant :
une ou plusieurs règles limitant la longueur d'une chaîne d'œuvres dérivées.

5. Procédé selon l'une quelconque des revendications 1 à 4, comportant en outre :
la présentation des résultats de vérification à un auteur du contenu modifié dérivé du contenu d'origine.

6. Procédé selon l'une quelconque des revendications 1 à 5, comportant en outre :
la fourniture d'une alerte à un auteur du contenu numérique d'origine.

7. Appareil comportant une circuiterie de traitement destinée à :
générer un contenu numérique d'origine ;
générer un premier ensemble de règles se rapportant à des changements admissibles sur le contenu numérique d'origine ;
générer un certificat signé cryptographiquement comportant une référence qui donne accès au premier ensemble de règles et un hachage du contenu numérique d'origine ; et
publier le contenu numérique d'origine et le certificat signé cryptographiquement associé ;
comportant en outre une circuiterie de processeur destinée à :
recevoir, dans une entité évaluatrice, le contenu numérique d'origine, le certificat signé cryptographiquement, et un contenu numérique modifié dérivé du contenu numérique d'origine ;
extraire, à partir du certificat signé, le premier ensemble de règles se rapportant à des changements admissibles sur le contenu numérique d'origine ;
appliquer le premier ensemble de règles au contenu numérique modifié pour générer un ensemble de résultats de vérification, ce qui comporte l'utilisation d'un ou de plusieurs outils pour vérifier si le contenu numérique modifié se conforme au premier ensemble de règles défini dans le certificat signé cryptographiquement, et le certificat comportant un hachage identifiant l'outil ou les outils ; et
stocker l'ensemble de résultats de vérification dans une mémoire lisible par ordinateur en association avec un identifiant du certificat signé.

8. Appareil selon la revendication 7, le premier ensemble de règles comportant au moins un élément parmi :
une quantité maximum de changement admissible pour au moins un objet dans le contenu numérique d'origine ;
une quantité minimum de changement admissible pour au moins un objet dans le contenu numérique d'origine ;
un identifiant d'une ou plusieurs parties du contenu numérique d'origine qui ne peuvent pas être modifiées ;
une ou plusieurs règles stipulant qui peut modifier le contenu numérique d'origine ;
une ou plusieurs règles stipulant qui ne peut pas modifier le contenu numérique d'origine ;
une ou plusieurs règles stipulant quels outils peuvent être utilisés pour modifier le contenu numérique d'origine ; ou
une ou plusieurs règles définissant si le contenu numérique d'origine peut être étendu ou modifié.

9. Appareil selon l'une quelconque des revendications 7 à 8, le premier ensemble de règles comportant :
une ou plusieurs règles liant le premier ensemble de règles à un contrat intelligent.

10. Appareil selon l'une quelconque des revendications 7 à 9, le premier ensemble de règles comportant :
une ou plusieurs règles limitant la longueur d'une chaîne d'œuvres dérivées.

11. Appareil selon l'une quelconque des revendications 7 à 10, comportant en outre une circuiterie de traitement destinée à :
présenter les résultats de vérification à un auteur du contenu modifié dérivé du contenu d'origine.

12. Appareil selon l'une quelconque des revendications 7 à 11, comportant en outre une circuiterie de traitement destinée à :
fournir une alerte à un auteur du contenu numérique d'origine.
